# EUROPEAN PATENT SPECIFICATION

(11) **EP 3 175 639 B1**
(45) Date of publication and mention of the grant of the patent: **14.04.2021**
(21) Application number: 14744128.1
(22) Date of filing: 28.07.2014
(51) Int. Cl.: H04W 12/041, H04W 12/043, H04W 12/069, H04W 36/00, H04L 9/08, H04L 29/06, H04W 48/18

(54) **AUTHENTICATION DURING HANDOVER BETWEEN TWO DIFFERENT WIRELESS COMMUNICATIONS NETWORKS**
AUTHENTIFIZIERUNG WÄHREND EINER VERBINDUNGSÜBERGABE HANDOVERS ZWISCHEN UNTERSCHIEDLICHE DRAHTLOSE NETZE.
AUTHENTICATION DURANT UN TRANSFER INTERCELLULAIRE ENTRE DEUX RÉSEAUX DIFFÉRENTS DE COMMUNICATION SANS FIL

(43) Date of publication of application: 07.06.2017
(73) Proprietor: Telefonaktiebolaget LM Ericsson (publ), 164 83 Stockholm (SE)
(72) Inventor: MESTANOV, Filip, S-191 49 Sollentuna (SE); HEDBERG, Tomas, S-113 26 Stockholm (SE); NORRMAN, Karl, S-116 28 Stockholm (SE); TEYEB, Oumer, S-177 44 Solna (SE); VIKBERG, Jari Tapio, S-153 38 Järna (SE)
(74) Representative: Zacco Sweden AB
(86) International application number: PCT/EP2014/066199
(87) International publication number: WO 2016/015749

(56) References cited:
- US-A1- 2007 005 972
- US-A1- 2013 305 332
- US-A1- 2014 050 320
- US-A1- 2014 059 662

## Description

### TECHNICAL FIELD

The invention relates to the field of authentication in a communications network, and in particular to authentication of a mobile device that has already been authenticated in another network.

### BACKGROUND

There is currently a drive to use Wi-Fi access networks to off-load signalling load from a 3GPP network. For example, a Radio Base Station (RBS) may provide 3GPP services within a certain area. Within that area, one of more Wi-Fi 'hotspots' may be provided by Wi-Fi Access Points (APs), each of which allows Wi-Fi access to a communications network for a mobile client device such as a User Equipment (UE). Note that the same device is termed a UE in the context of a 3GPP network, and a Station (STA) in the context of a Wireless Local Area Network (WLAN). The UE therefore can choose to access a communications network via 3GPP, Wi-Fi or both. In the following description, the term UE is used. It will be understood that a UE accessing a WLAN may be termed a Station.

UEs that are both 3GPP capable and Wi-Fi capable can use either type of access. If a UE is capable of accessing a Wi-Fi AP, and such accessing is enabled, the UE will typically automatically connect to a (known) Wi-Fi network as soon as the UE detects the Wi-Fi network. The UE may maintain its 3GPP registration for services such as voice and short message service (SMS), but may exclusively use the Wi-Fi access network for packet data.

When a UE attaches to a WLAN network, an authentication procedure is followed, as described for example in RFC 4186 for the EAP-SIM case. In brief, the UE communicates with an AP in order to be authenticated. The AP determines the UE identity (for example, a permanent UE identity such as an International Mobile Subscriber Identity, IMSI, or a temporary UE identity such as a pseudonym). The AP contacts an Authentication, Authorization and Accounting (AAA) server (at least partly based on the UE identity) which initiates an EAP-SIM procedure. This involves sending an EAP-Request/SIM/Start to the UE via the AP indicating that EAP-SIM authentication is initiated. The UE responds with a random number (NONCE_MT) and other parameters to the AAA in EAP-Response/SIM/Start. The AAA obtains a GSM triplet (RAND, SRES, Kc) from a Home Location Register (HLR) or Authentication Centre (AuC) and derives keying material, as described in Chapter 7 of RFC 4186. The AAA generates an EAP-Request/SIM/Challenge message that includes a RAND value and a first message authentication code attribute AT_MAC. The first AT_MAC is derived from the RAND and Kc values. The EAP-Request/SIM/Challenge message is sent to the UE, which uses the received RAND value to determine a second AT MAC and a SRES value. If the second AT MAC value derived at the UE matches the first AT MAC value derived by the AAA server, then authentication can proceed. The UE generates a third AT_MAC based on the SRES and this is sent to the AAA server in a EAP-Response/ SIM/Challenge message. Once the AAA server verifies the third AT_MAC derived by the UE, it sends an EAP-Success message to the AP that also includes keying materials in the form of a Pairwise Master Key (PMK). The PMK is not sent to the UE, but stored at the AP. Note that PMK can also be derived by the UE as it is based on Kc.

The AP uses the PMK to generate an Authenticator nonce (ANonce), which is sent to the UE. The UE uses the ANonce along with a Supplicant nonce (SNonce) and the PMK to generate a Pairwise Temporal Key (PTK). The SNonce is sent to the AP which also constructs the PTK, and in addition generates a Group Temporal Key (GTK). The GTK is sent to the UE along with an instruction to install the PTK. The UE then installs the PTK and the GTK, and uses these two keys to encrypt and decrypt all communication sent via the AP.

IEEE 802.11r introduces a fast transition management to support handovers between APs that are part of the same mobility domain. This means that a new authnitcation procedure need not be followed when the UE attaches to a new AP; instead, only a fresh PTK is derived.

Turning now to 3GPP access networks, a UE is authenticated using an Authentication and Key Agreement (AKA) protocol. The AKA protocol results in the UE and a Mobility Management Entity (MME) being mutually authenticated and sharing a session key termed K_{ASME}.

The UE initiates the procedure by sending an attach request to the MME. The message contains the identity of the UE, the IMSI (or a temporary identity that the MME can map to the IMSI). The MME requests an authentication vector (AV) for the UE from a Home Subscriber Server (HSS). The HSS replies with an AV. The AV contains a random challenge RAND, the expected result to the challenge XRES, an authentication token AUTN, and a session key K_{ASME}. The MME sends the RAND and AUTN to the UE, which computes a response to the RAND using the USIM. The result is called RES. The UE also verifies the network authenticity and RAND freshness by verifying the AUTN, again using the USIM. If the verification passes, the UE sends the response RES back to the MME. The MME verifies that the RES matches the XRES. If they match, the UE is considered authenticated and the MME starts NAS security based on K_{ASME} by running the security mode procedure. The UE calculates K_{ASME} from the RAND using the USIM and starts NAS security based on that K_{ASME}. The MME sends an attach accept to the UE to complete the attach procedure.

When a UE establishes a connection to the EPS core network via a non-3GPP access, it performs an EAP-AKA or EAP-AKA' authentication similar to that described above (and with some similarities to the described EAP-SIM procedure). There is no concept of handover between the two types of access, but connections are established and torn down independently. Note that access to the EPS core network is only allowed if the UE is equipped with a USIM so that the UE can run EAP-AKA('). A session key is established as a result of the authentication.

Two functions are provided for the maintenance of security between the UE and an eNB: ciphering of both control plane (RRC) data (i.e. SRBs 1 and 2) and user plane data (i.e. all DRBs), and integrity protection which is used for control plane (RRC) data only. Ciphering is used in order to protect data streams from being read and interpreted by a third party, while integrity protection allows the receiver to detect packet insertion or replacement/modification. RRC always activates both functions together, either following connection establishment or as part of the handover to LTE. The process is based on a common secret key K_{ASME} which is available only in the Authentication Centre in the HSS and in a secure part of the Universal Subscriber Identity Module (USIM) in the UE.

A set of keys and checksums (the AV) are generated at the Authentication Centre using this secret key and a random number. The generated keys, checksums and random number are transferred to the MME, which passes one of the generated checksums and the random number to the UE. The USIM in the UE then computes the same set of keys using the random number and the secret key. Mutual authentication is performed by verifying the computed checksums in the UE and network using NAS protocols.

Upon connection establishment, the AS derives an AS base-key K_{eNB}, which is eNodeB specific, from K_{ASME}. K_{eNB} is used to generate three further security keys known as the AS derived-keys: one for integrity protection of the RRC signalling (SRBs), one for ciphering of the RRC signalling and one for ciphering of user data (DRBs).

Regarding security during handover in LTE, the concept of forward security was introduced to ensure adequate security and minimize the risk of unauthorized access. Forward security means that without the knowledge of K_{ASME}, even with the knowledge of K_{eNB} (key shared between the UE and the current eNB), it will be computationally difficult to generate K_{eNB}s to be used between the UE and eNBs that the UE will connect to in the future.

Whenever an initial AS security context needs to be established between UE and eNB, the MME and the UE derive a K_{eNB} and a Next Hop parameter (NH). K_{eNB} and the NH are derived from K_{ASME}. A NH Chaining Counter (NCC) is associated with each K_{eNB} and NH parameter. Every K_{eNB} is associated with the NCC corresponding to the NH value from which it was derived. At initial setup, K_{eNB} is derived directly from K_{ASME}, and is then considered to be associated with a virtual NH parameter with NCC value equal to zero. At initial setup, the derived NH value is associated with the NCC value one.

The MME does not send the NH value to eNB at the initial connection setup. The eNB initializes the NCC value to zero after receiving an S1-AP Initial Context Setup Request message.

The UE and the eNB use K_{eNB} to secure the communication. On handover, the basis for the K_{eNB} that will be used between the UE and the target eNB, called K_{eNB}*, is derived from either the currently active K_{eNB} or from the NH parameter. If K_{eNB}* is derived from the currently active K_{eNB} this is referred to as a horizontal key derivation and if K_{eNB}* is derived from the NH parameter the derivation is referred to as a vertical key derivation. On handover with vertical key derivation, the NH is further bound to the target PCI and its frequency EARFCN-DL before it is taken into use as the K_{eNB} in the target eNB. On handover with horizontal key derivation the currently active K_{eNB} is further bound to the target PCI and its frequency EARFCN-DL before it is taken into use as the K_{eNB} in the target eNB.

As NH parameters are only computable by the UE and the MME, NH parameters must be provided to eNBs from the MME in such a way that forward security can be achieved.

In 3GPP-WLAN interworking scenarios, communication between the user and the network is protected by means of data encryption. Each user is associated with a unique master key used for the data encryption algorithms. Some authentication mechanisms may require reuse of a single master key (associated with a certain user) in multiple network entities. However, if an intruder manages to gain access one of those network entities, they obtain the master keys for all network entities associated with the user, thereby compromising the privacy of the users' communication.

US 2007/005972 is a disclosure directed to refreshing of symmetric keys to reduce security risks. US 2014/059662 is a disclosure directed to security context transfer between a circuit switched network and an e-UTRAN network.

### SUMMARY

It is an object to minimize the security risk when an authentication master key such as a PMK is transferred from one device to another. In order to ensure that security risks in the system are minimized, it is proposed that a single authentication master key cannot be used more than once. However, generating a new authentication master key at each new authentication would place a burden on backend authentication devices such as the AAA server.

According to a first aspect, there is provided a method of authenticating a mobile device in a second network when the mobile device is already authenticated in a first network. An authentication device in the first network generates an authentication master key associated with the mobile device using a first nonce generated by the authentication device and a second nonce generated by the mobile device. The generated authentication master key is sent to a second authentication device in the second network, where is usable by the second authentication device to authenticate the mobile device in the second network. An advantage of this is that security-sensitive authentication master keys need not be sent from the mobile device if a procedure is in place allowing authentication master keys to be re-used for more efficient authentication.

An option example of an authentication master key is a Pairwise Master Key.

As a further option, the method includes, prior to generating the authentication master key, receiving at the first authentication node a request for the authentication master key, the request including the second nonce generated by the mobile device. The generated authentication master key is then sent to the second authentication device.

The mobile device optionally receives from the authentication device in the first network the first nonce. It then generating the second nonce and, after generating the authentication master key using the first and second nonces, sends the second nonce to the authentication device in the first network, the second nonce being usable by the authentication device in the first network to generate the authentication master key. As a further option, the first nonce is received and the second nonce is sent using any of Extensible Authentication Protocol over Local Area Network, EAPOL, and Wireless Network Management, WNM, Notification signalling.

As an option, the authentication device in the first network receives from the second authentication device a request for the authentication master key. It generates the first nonce and sends the first nonce towards the mobile device. It receives from the mobile device the second nonce and generates the authentication master key using the first and second nonces. The generated authentication master key may be sent to the second authentication device.

As an option, the first network is a 3GPP network and the second network is a Wireless Local Area Network. Alternatively, the first network is optionally a Wireless Local Area Network and the second network is a 3GPP network.

According to a second aspect, there is provided a method of authenticating a mobile device in a second network, the mobile device already being authenticated in a first network. An authentication device in the second network receives a generated authentication master key from a first network authentication device, the authentication master key having been generated using a first nonce generated by the first network authentication device and a second nonce generated by the mobile device. The generated authentication master key is used to authenticate the mobile device in the second network.

The authentication master key is optionally a Pairwise Master Key.

As a further option, prior to receiving the generated authentication master key, the authentication device in the second network sends a request for the authentication master key to the first network authentication device.

According to a third aspect, there is provided a device arranged to generate an authentication master key for authenticating a mobile device in a second network, the mobile device already being authenticated in a first network. The device comprises a processor arranged to generate the authentication master key associated with the mobile device using a first nonce generated by an authentication device in the first network, and a second nonce generated by the mobile device, and send the generated authentication master key to a second authentication device in the second network. The generated authentication master key is usable by the second authentication device to authenticate the mobile device in the second network.

As an option, the device is an authentication device in the first network, the authentication device further comprising a receiver arranged to receive a request for the authentication master key, the request including the second nonce generated by the mobile device, and a transmitter arranged to send the generated authentication master key to a second authentication device.

As an alternative option, the device is the mobile device and comprises a receiver configured to receive from the authentication device in the first network the first nonce. In this case, the processor is configured to generate the second nonce and the transmitter is configured to send the second nonce towards the authentication device in the first network, the second nonce being usable by the authentication device in the first network to generate the authentication master key.

The receiver and transmitter are optionally arranged to receive and send signalling using any of Extensible Authentication Protocol over Local Area Network, EAPOL, and Wireless Network Management, WNM, Notification signalling.

As an option, the device is an authentication device in the first network, and comprises a receiver arranged to receive from the second authentication device a request for the authentication master key. The processor is arranged to generate the first nonce and the transmitter is arranged to send the first nonce towards the mobile device. The receiver is arranged to receive from the mobile device the second nonce. The processor is arranged to generate the authentication master key using the first and second nonces and the transmitter is arranged to send the generated authentication master key to the second authentication device.

The authentication master key is optionally a Pairwise Master Key.

According to a fourth aspect, there is provided a computer program comprising computer readable code which, when run on an authentication device, causes the authentication device to perform the method as described above in the third aspect.

According to a fifth aspect, there is provided a computer program comprising computer readable code which, when run on a mobile device, causes the mobile device to perform the method as described above.

According to a sixth aspect, there is provided a computer program product comprising a non-transitory computer readable medium and a computer program as described above in the fourth or fifth aspects, wherein the computer program is stored on the computer readable medium. The invention is defined by the appended claims.

### BRIEF DESCRIPTION OF DRAWINGS

Figure 1 is a signalling diagram showing an exemplary situation in which a PMK is transferred between entities;
Figure 2 is a flow diagram showing exemplary steps;
Figure 3 is a flow diagram showing exemplary steps according to a first embodiment;
Figure 4 is a signalling diagram showing exemplary signalling according to the first embodiment;
Figure 5 is a flow diagram showing exemplary steps according to a second embodiment;
Figure 6 is a signalling diagram showing exemplary signalling according to the second embodiment;
Figure 7 illustrates schematically in a block diagram an EAPOL-Announcement frame format;
Figure 8 illustrates schematically in a block diagram an EAPOL-Announcement-Req frame format;
Figure 9 illustrates schematically in a block diagram an exemplary TLV frame format;
Figure 10 illustrates schematically in a block diagram a WMN-Notification Action frame;
Figure 11 illustrates schematically in a block diagram a WMN-Notification Action frame having vendor specific formatting;
Figure 12 illustrates schematically in a block diagram an exemplary authentication device in a first network;
Figure 13 illustrates schematically in a block diagram an exemplary mobile device; and
Figure 14 illustrates schematically in a block diagram an exemplary authentication device in a second network.

### DETAILED DESCIPTION

When a mobile device that is already attached to a 3GPP network attaches to a WLAN network (either instead of or in addition to being attached to the 3GPP network), it must be authenticated in the WLAN network. However, this places a signalling and processing burden on backend servers such as the AAA server and the HSS and causes a delay before the mobile device can start to use the WLAN network. It is proposed to allow the WLAN AC to obtain authentication credentials that have been used in the 3GPP network, for example from an MME. The authentication credentials include the PMK used when authenticating the mobile device in the 3GPP network.

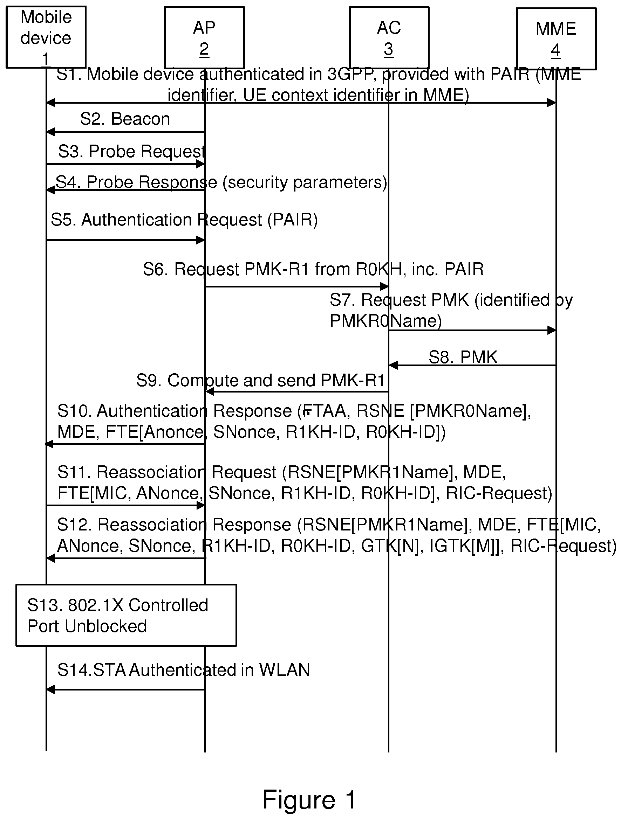

In order to achieve this, an interface is set up between the ROKH (in this example, the WLAN AC) and the MME. This interface is used to transfer the PMK from the MME to the ROKH when the mobile device attempts authentication in the WLAN network. Figure 1 is a signalling diagram showing a mobile device 1, an AP 2, an AC 3 and an MME 4. The following numbering corresponds to that of Figure 1. "
S1. The mobile device 1 is authenticated in a 3GPP network and provided with information identifying primary authentication information (PAIR) used to authenticate the device in the 3GPP network. The PAIR comprises an MME identifier and a UE context identifier used in the MME. When the mobile device 1 is attached in the 3GPP network, the PMKROName is provided to the mobile device 1. A possible way to do that is making use of the Security Mode Command procedure, which can be executed at initial 3GPP Attach, but could also be invoked at a later point. Other options including the PMKROName in the Attach accept or authentication messages or in Tracking/Routing Area Accept messages. The last option has the advantage that in case the mobile device 1 moves into coverage of a new MME/SGSN, the new PMKROName will be assigned when that event happens. Further options are to include the PMKROName in RRC messages sent from the eNB to the STA (e.g., RRC Connection Setup). The
S2. The mobile device 1 receives a Beacon frame revealing (among other parameters) the security features associated with the BSS/ESS the AP 2 belongs to. The format of the beacon frame as well as all the information elements it carries are described in Chapter 8.3.3.2 of IEEE 802.11;
S3 If the mobile device 1 does not receive a Beacon frame, it generates a Probe Request and sends it to the AP 2. This procedure is called active scanning and by performing it, the mobile device 1 can receive from the AP 2 the same information as it would have from a Beacon message. The Probe Request frame is described in Chapter 8.3.3.9 of IEEE 802.11.
S4. The AP 2 answers with a Probe Response.
S5. The mobile device 1 sends an Authentication Request to the target AP 2, the request including the PAIR.
S6. The AP 2 requests the PMK-R1 from the default ROKH and sends the PAIR. The ROKH is the AC 3. The AC 3 locates the correct MME using the MME identifier part of the PAIR.
S7. The ROKH (in this case the AC 3) requests the PMK from the MME 4, including the UE context identifier used in the MME (part of PAIR). The PMK is identified by the the UE context identifier in the MME 4 (again as informed by the mobile device 1 in S5).
S8. The MME 4 derives the PMK using K_{ASME} and other parameters and provides the PMK to the AC 3;
S9. The ROKH computes the PMK-R1 to be used and provides it to the AP 2.
S10. The AP 2 then responds to the mobile device 1 with an Authentication Response, indicating the FTAA, the RSNE, the MDE and the FTE (which in this case carries also the Authentication Nonce, ANonce, and the ROKH-ID).
S11. The mobile device 1 re-associates with the target AP 2 within the allowed Re-association Deadline Time, sending a Re-association Request.
S12. The target AP 2 responds with a Re-association Response.
S13. The 802.1X controlled port is unblocked and the mobile device 1 can successfully transmit (encrypted) data with the target AP 2.
S14. The mobile device 1 transmits data over the WLAN.

The MME 4 generates the PMK from the K_{ASME} of the currently active EPS security context or from an inactive native EPS security context. The generation is done by applying a key derivation function to the K_{ASME}.

The signalling flow of Figure 1 is one example where a PMK may be transferred between entities (in this case from the MME 4 to the ROKH, in this example the AC 3). As mentioned above, this is a security risk as the authentication and communication privacy could be compromised by a malicious third party.

In order to address this issue, it is proposed that each time a PMK must be exchanged between network entities (e.g., between the MME 4 and the ROKH 3) a new PMK is derived. In order to achieve this, both the network entity that holds the PMK (e.g., the MME 4) and the mobile device 1 provide arbitrary random input for the derivation of the new PMK.

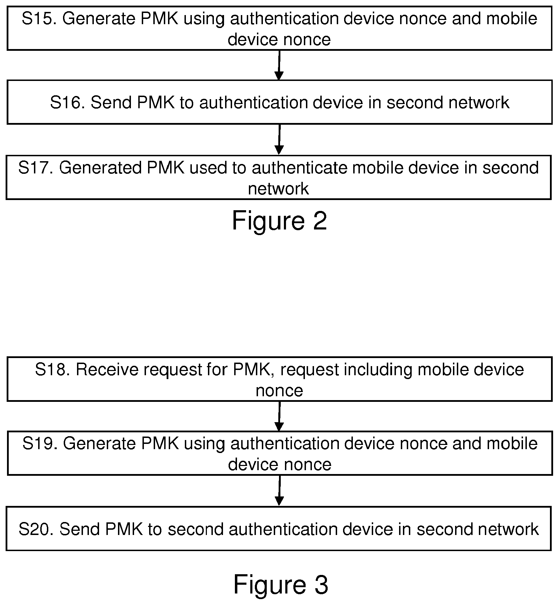

Figure 2 is a flow diagram showing exemplary steps for deriving a new PMK when it is to be exchanged between network entities. The following numbering corresponds to that of Figure 2.
S15. A mobile device 1 or authentication device such as an MME 4 generates a PMK using a first nonce generated by the authentication device and a second nonce generated by the mobile device 1.
S16. The newly generated PMK is sent by the authentication device to a second authentication device in a second network, such as an AC 3 in the case where the mobile device is already authenticated in a 3GPP network and wishes to be authenticated in a WLAN served by the AC 3.
S17. The second authentication device uses the received PMK to authenticate the mobile device 1.

An advantage of the steps described above is that, even though an existing PMK has been generated for authentication in the 3GPP network, a "fresh" PMK can be generated independently at the mobile device 1 and the MME 4, and provided to the AC 3. This allows the AC 3 to authenticate the mobile device 1 without needing to send the original 3GPP PMK to the AC 3.

Two exemplary embodiments are described below. It will be appreciated that the principles described above may be implemented in other ways.

In the first embodiment, the steps shown in Figure 1 are used, with some alterations. No new signalling is required compared to the signalling of Figure 1. In the second embodiment, additional signalling is introduced between the entity that holds the PMK (the MME 4) and the mobile device 1. Both embodiments are described below using the mobile device 1 and the MME 4 as an example in which the PMK is to be sent from the MME 4 to the ROKH (in this case the AC 3) in the network that is to authenticate the mobile device 1. The skilled person will realise that the same techniques may be applied whenever there is a need to communicate a PMK between network entities, for example, from the ROKH to the MME 4, or between different R0KHs (in an example in which the mobile device 1 wishes to authenticate in a further WLAN).

Figure 3 shows exemplary steps for the first embodiment. The following numbering corresponds to that of Figure 3:
S18. The MME 4 receives a request for a PMK from the AC 3. The request includes a nonce generated by the mobile device 1.
S19. The MME 4 generates a nonce and a fresh PMK using the generated nonce and the nonce generated by the mobile device.
S20. The MME 4 sends the fresh PMK to the AC 3 for use by the AC in authenticating the mobile device 1 in the WLAN. The nonce generated by the MME 4 is also sent to the mobile device 1, allowing the mobile device 1 to derive the PMK during the authentication procedure.

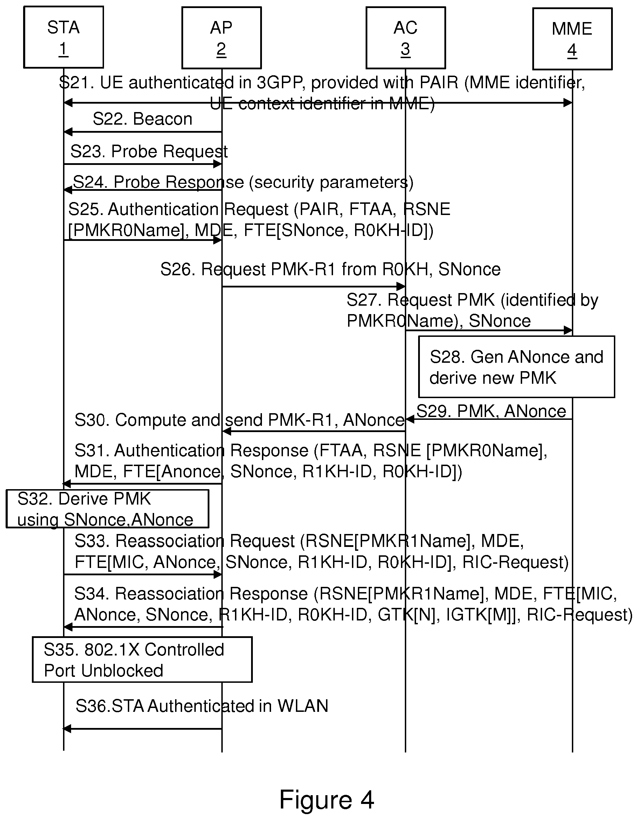

Figure 4 is a signalling diagram showing exemplary signalling. The following numbering corresponds to that of Figure 4.
S21-S25. These steps are the same as steps S1-S5 in Figure 1. The Authentication Request in step S25 includes SNonce.
S26. The AP 2 requests the PMK-R1 from the default ROKH 3 and sends the PAIR. The ROKH is the AC 3. The AC 3 locates the correct MME using the MME identifier part of the PAIR. (as informed by the mobile device 1 in step S25). The AP 2 also sends the SNonce received from the mobile device 1 to the AC 3.
S27. The ROKH (in this case the AC 3) requests the PMK from the MME 4, including the UE context identifier used in the MME (part of PAIR). The PMK is identified by UE context identifier in the MME 4 (again as informed by the mobile device 1 in step S25). The AC 3 also sends the mobile device SNonce to the MME 4.
S28. The MME 4 generates an ANonce. Based on the received SNonce, the generated ANonce and the PMK, the MME derives a "fresh" PMK.
S29. The MME 4 provides the fresh PMK to the AC 3 and also sends the ANonce.
S30. The ROKH 3 computes PMK-R1 to be used and provides it to the AP 2. The AC 3 also relays the ANonce to the AP 2.
S31. The AP 2 responds to the mobile device 1 with an Authentication Response, indicating the FTAA, the RSNE, the MDE and the FTE (which in this case carries also the Authentication Nonce, ANonce, and the ROKH-ID). Note that the ANonce in this message is the same ANonce that the was generated by the MME 4 and relayed to the AP 2 via the AC 3.
S32. The mobile device 1, having the SNonce, the ANonce and the original PMK, derives the same fresh PMK as the MME 4.
S33. The mobile device 1 re-associates with the target AP 2 within an allowed Re-association Deadline Time, sending a Re-association Request.
S34 The target AP 2 responds to the mobile device 1 with a Re-association Response.
S35 The 802.1X controlled port is unblocked and the mobile device 1 can successfully exchange (encrypted) data with the target AP 2.
S36 The mobile device 1 is successfully transmitting data over WLAN.

An advantage of the procedure of the first embodiment is in the reuse of the messaging of Figure 1, which eliminates the need to introduce and implement new communication exchanges between the mobile device 1 and the MME 4.

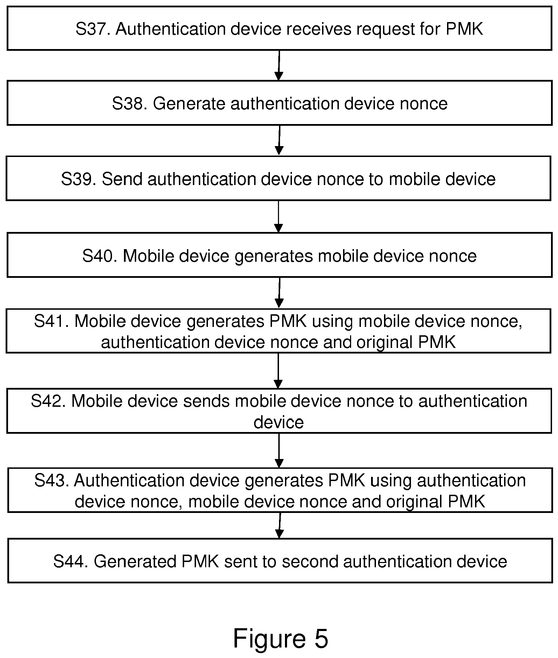

Considering now the second embodiment, additional communication between the mobile device 1 and the MME 4 is introduced in order to generate a fresh PMK. Figure 5 is a flow diagram showing exemplary steps. The following numbering corresponds to that of Figure 5:
S37. The authentication device (the MME 4 in this example) receives a request for the PMK from a second authentication device (in this example, the AC 3 controlling the WLAN that the mobile device 1 wishes to be authenticated in).
S38. The authentication device generates an authentication device nonce.
S39. The authentication device nonce is sent to the mobile device 1.
S40. The mobile device generates a mobile device nonce.
S41. The mobile device generates a fresh PMK using the authentication device nonce, the mobile device nonce and the original PMK.
S42. The mobile device 1 sends the mobile device nonce towards the authentication device 4.
S43. The authentication device 4 generates the fresh PMK using the authentication device nonce, the mobile device nonce and the original PMK.
S44. The fresh PMK is sent to the AC 3 for use in authenticating the mobile device 1 in the WLAN network.

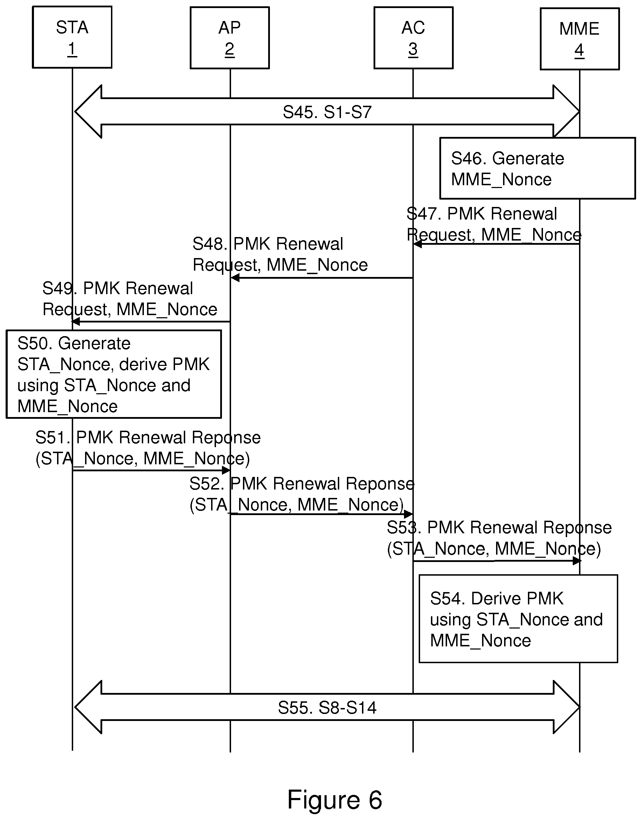

Figure 6 is a signalling diagram showing exemplary signalling for the second embodiment when authenticating the mobile device in a WLAN network when the mobile device 1 is already authenticated in the 3GPP network. The following numbering corresponds to that of Figure 6:
S45. The same signalling as steps S1 to S7 shown in Figure 1 is carried out.
S46. The MME 4 determines that the PMK the AC 3 is requesting has already been used and it is a security threat to use it again. The MME 4 triggers a procedure for the derivation of a "fresh" PMK by generating an MME_Nonce (an arbitrary random number);
S47. The MME sends a "PMK Renewal Request" towards the mobile device, the request including the MME_Nonce;
S48. The AC 3 relays the request to the AP 2.
S49. The AP 2 relays the "PMK Renewal Request" to the mobile device 1.
S50. The mobile device 1 generates a STA_Nonce (another arbitrary number) and computes a new "fresh" PMK based on the received MME_Nonce and the generated STA_Nonce.
S51. The mobile device 1 sends a "PMK Renewal Response", including the MME_Nonce and the STA_Nonce;
S52. The AP 2 relays the "PMK Renewal Request" to the AC 3.
S53. The AC 3 relays the "PMK Renewal Request" to the MME 4.
S54. The MME 4 derives the same new "fresh" PMK as the mobile device 1, using on the STA_Nonce and the MME_Nonce).
S55. The same signalling as steps S8 to S14 shown in Figure 1 is carried out.

The procedure shown in Figure 6 could be imitated by the MME 4 on a need basis. The MME may take a decision on when this procedure should be used. In that case, one possible implementation would be to re-use the procedure shown in Figure 4, reusing the same security key for a certain amount of time (or number of times the PMK has been used). In that case the MME 4 could, for example, keep state of the amount of time (or the number of times) that a particular mobile device 1 has used the same key and if this time (or number of times) is larger than a certain threshold, the MME 4 could initiate the procedure for renewal of the security key.

The signalling in steps S48 to S52 could use different protocols. For example, this signalling could use existing Extensible Authentication Protocol Over LAN (EAPOL) messages, some other WLAN-specific protocol such as Wireless Network Management (WNM)-Notification frames or Non-Access Stratum (NAS) messages.

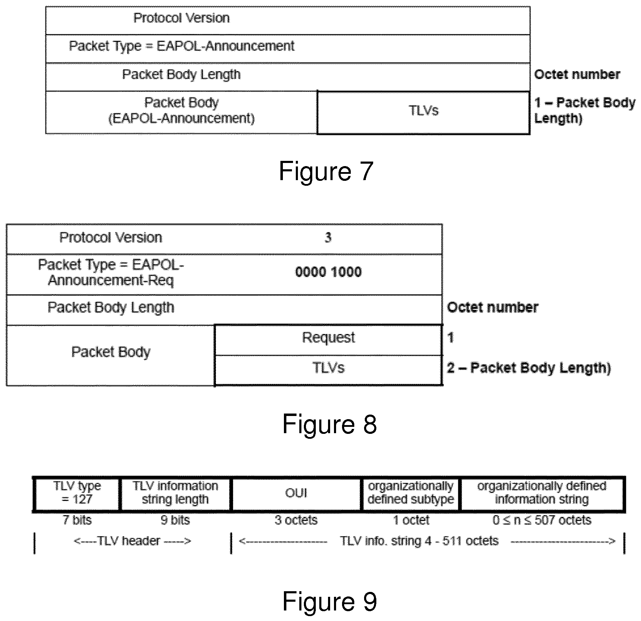

Where EAPOL messages are used, the EAPOL-Announcement and the EAPOL-Announcement-Req can be used. The formats of both frames are shown in Figures 7 and 8. The Type Length Value (TLVs) fields are of type 127 ("Organizationally Specific TLVs" as described in Chapter 11.12 of IEEE 802.1X). The organization specific formatting is shown on Figure 9. In this frame, the "Organizationally defined information string" field includes placeholders for transporting the MME_Nonce and the STA_Nonce. In this example, steps S48 and S49 of Figure 6 use an EAPOL-Announcement-Req, and steps S51 and S52 of Figure 6 use an EAPOL-Announcement. The "PMK Renewal Response" messages may be carried using proprietary signalling or over-the-top.

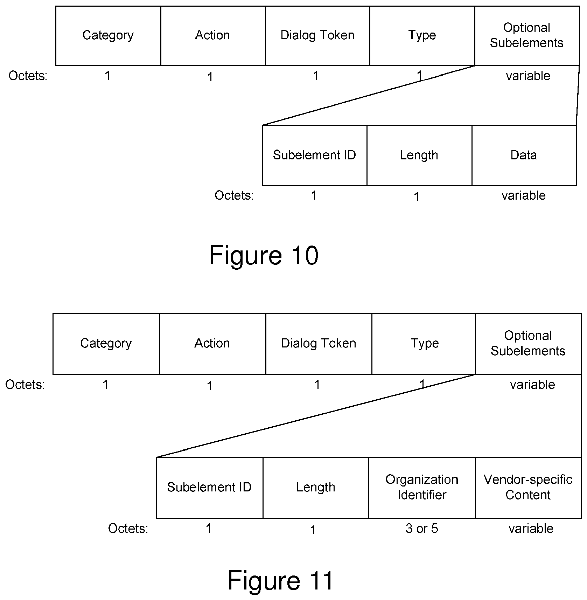

Alternatively, the signalling between the mobile device 1 and the MME 4 may be implemented using IEEE 802.11 WNM-Notification frames. A WNM-Notification Action frame is shown in Figure 10. The "Optional Subelement" field shown in Figure 10 is formatted as a "Vendor specific element". The resulting frame formatting is shown in Figure 11. The "Vendor-specific content" field shown in Figure 11 includes placeholders for transporting the MME_Nonce and the STA_Nonce. In this example, the messages of steps S48 and S49 of Figure 6 are carried using a WNM-Notification Request, and steps S51 and S52 of Figure 6 are carried out using a WNM-Notification Response. The "PMK Renewal Response" messages may use a proprietary signalling protocol or be sent over-the-top.

The examples above all assume that the mobile device 1 is authenticated in a 3GPP network and is subsequently authenticated in a WLAN. It will be appreciated that the same principles can be used when the mobile device is authenticated in a WLAN and subsequently requires authentication in a 3GPP access network. For example, the MME 4 may implement ROKH functionality. In this case, when the mobile device 1 authenticates in a WLAN, the PMK is provided by the HSS to the MME. When the mobile device subsequently attempts to connect to a 3GPP network and requires authentication, the PMK can be re-used. The mobile device sends an attach request to the MME 4 containing the IMSI (or an identity that can be mapped to the IMSI) and the identity of the mobile device 1. The MME 4 sends a RAND and AUTN to the mobile device, which computes a response (RES) to the RAND using the USIM. The RES is returned to the MME 4 which verifies that the RES matches an expected RES. If so, then the mobile device 1 is considered to be authenticated and the MME 4 starts a security mode procedure based on K_{ASME}. The mobile device 1 calculates K_{ASME} from the RAND using the USIM and response to the MME. The MME 4 then sends an attach accept message to the mobile device 1 confirming that the mobile device is now authenticated in the 3GPP network.

In an alternative embodiment in which the mobile device 1 is authenticated with a WLAN and wishes to attach to a 3GPP network, the MME 4 holds the PMK. The mobile device 1 sends an attach request to the MME 4. The attach request contains the identity of the mobile device 1 and the IMSI (or an identifier that can be mapped to the IMSI by the MME 4). The MME 4 sends an attach accept message to the mobile device 1, confirming that the mobile device 1 is authenticated in the 3GPP network.

It will also be appreciated that the same principles may be used with any other types of network using suitable RATs.

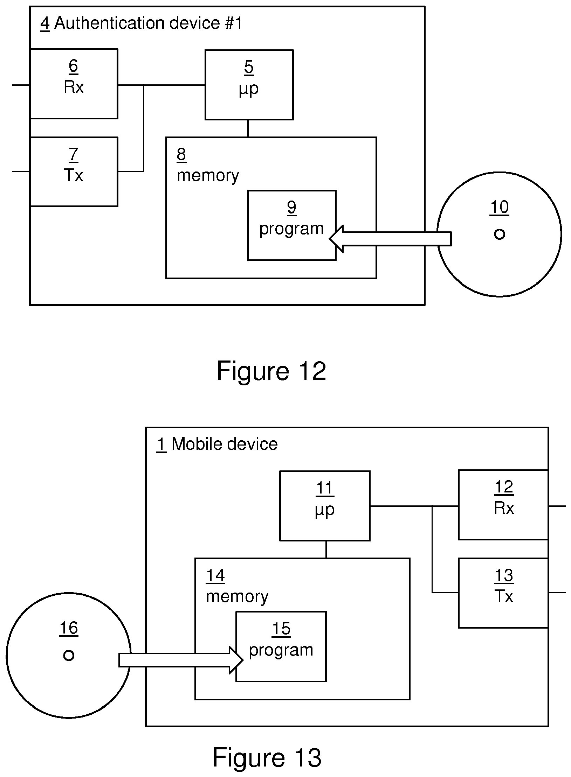

Referring to Figure 12 herein, there is illustrated schematically an exemplary first authentication device 4 for use in the first network. Examples of such an authentication device include an MME 4 where the first network is a 3GPP network, or an AC where the first network is a WLAN network. The first authentication device 4 is provided with a processor 5 arranged to generate the authentication master key (such as a PMK) associated with the mobile device 1 using a first nonce generated by the authentication device 4 in the first network, and a second nonce generated by the mobile device 4. A receiver 6 is provided that is arranged to receive a request for the authentication master key, the request including the second nonce generated by the mobile device, and a transmitter 7 is provided that is arranged to send the generated authentication master key towards a second authentication device in the second network.

A non-transitory computer-readable medium in the form of a memory 8 is provided that can be used to store a computer program 9 which, when executed by the processor 5, causes the processor 5 to perform the steps described above. Note that the computer program may be provided on an external non-transitory computer readable medium 10, or on a carrier signal.

In the example of Figure 12, the authentication device generates the authentication master key.

Turning now to Figure 13, there is illustrated schematically in a block diagram an exemplary mobile device 1. The mobile device is provided with a processor 11 arranged to generate the authentication master key associated with the mobile device 1 using a first nonce generated by an authentication device 4 in the first network, and a second nonce generated by the mobile device 1. A receiver 12 is arranged to receive from the authentication device in the first network the first nonce. The transmitter 13 is arranged to send the second nonce towards the authentication device 4 in the first network, the second nonce being usable by the authentication device in the first network to generate the authentication master key.

A non-transitory computer-readable medium in the form of a memory 14 is provided that can be used to store a computer program 15 which, when executed by the processor 11, causes the processor 11 to perform the steps described above. Note that the computer program may be provided on an external non-transitory computer readable medium 16, or on a carrier signal.

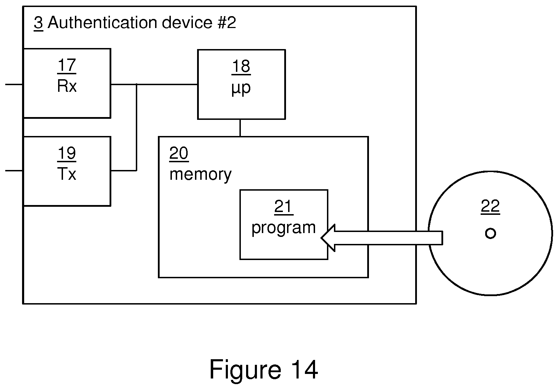

Turning now to Figure 14, there is illustrated a second authentication device for use in the second network. In the example where the first network is a 3GPP network and the second network is a WLAN network, the second authentication device may be an AC 3. Note, however, that the first network may be a WLAN network and the second network may be a 3GPP network, in which case the second authentication device may be an MME 4. Other types of network are also possible. In this example, the second authentication device is assumed to be an AC 3.

The second authentication device 3 is provided with a receiver 17 arranged to receive a generated authentication master key from the first network authentication device 4 or a second nonce from which the authentication master key can be generated. A processor 18 is provided, arranged to use the generated authentication master key to authenticate the mobile device 1 in the second network. A transmitter 19 may be provided, which is arranged to, prior to receiving the generated authentication master key, send to the first network authentication device mobile a request for the authentication master key.

A non-transitory computer-readable medium in the form of a memory 20 is provided that can be used to store a computer program 21 which, when executed by the processor 18, causes the processor 18 to perform the steps described above. Note that the computer program may be provided on an external non-transitory computer readable medium 22, or on a carrier signal.

By generating a fresh PMK when a second authentication device wishes to authenticate the mobile terminal 4, the security risk of sending a PMK from an MME 4 to an ROKH (such as an AC 3), or between R0KHs, is minimized.

It will be appreciated by the person of skill in the art that various modifications may be made to the above-described embodiments without departing from the scope of the present invention. For example, the above description gives the example of sending a fresh PMK from an MME to an AC, but it will be appreciated that the same techniques may be used whenever it is required to send a PMK between devices over a communication network regardless of the RAT of the first network and the second network.

The following abbreviations have been used in the above description:
- 3GPP: 3rd Generation Partnership Project
- AAA: Authentication, Authorization and Accounting
- AC: Access Controller
- AP: Access Point
- AKA: Authentication and Key Agreement
- AuC: Authentication Centre
- AV: Authentication Vector
- EAP: Extensible Authentication Protocol
- EAPOL: EAP over LAN
- eNB: eNodeB
- GTK: Group Temporal Key
- HLR: Home Location Register
- HSS: Home Subscriber Server
- IMSI: International Mobile Subscriber Identity
- LAN: Local Area Network
- LTE: Long Term Evolution
- MME: Mobility Management Entity
- NAS: Non-Access Stratum
- NH: Next Hop
- NCC: Next Hop Chaining Counter
- PMK: Pairwise Master Key
- PTK: Pairwise Temporal Key
- RBS: Radio Base Station
- SMS: Short Message Service
- STA: Station
- UE: User Equipment
- USIM: Universal Subscriber Identity Module
- WLAN: Wireless Local Area Network
- WNM: Wireless Network Management

## Claims

1. A method of authenticating a mobile device in a second network, the mobile device already being authenticated in a first network, the method comprising, at a first authentication device in the first network;
prior to generating an authentication master key, receiving (S18) at a first authentication node a request for the authentication master key, the request including a second nonce generated by the mobile device, wherein the request is received from a second authentication device in the second network and wherein the first network is a 3GPP network and the second network is a Wireless Local Area Network;
generating (S15) the authentication master key associated with the mobile device using a first nonce generated by the first authentication device and the second nonce generated by the mobile device;
sending (S16) the generated authentication master key to the second authentication device in the second network; and
wherein the generated authentication master key is used (S17) by the second authentication device to authenticate the mobile device in the second network, wherein the authentication master key is a Pairwise Master Key.

2. A method of authenticating a mobile device in a second network, the mobile device already being authenticated in a first network, the method comprising, at a second authentication device in the second network;
prior to receiving a generated authentication master key, sending (S37) to a first network authentication device a request for the authentication master key, wherein the first network is a 3GPP network and the second network is a Wireless Local Area Network;
receiving (S16) the generated authentication master key from the first network authentication device, the authentication master key having been generated using a first nonce generated by the first network authentication device and a second nonce generated by the mobile device;
using the generated authentication master key (S17) to authenticate the mobile device in the second network, wherein the authentication master key is a Pairwise Master Key.

3. A device (1; 4) arranged to generate an authentication master key for authenticating a mobile device in a second network, the mobile device already being authenticated in a first network, the device comprising:
a receiver (6) arranged to receive a request for an authentication master key, the request including a second nonce generated by the mobile device, prior to generating the authentication master key, wherein the device is a first authentication device (4) in the first network, wherein the request is received from a second authentication device in the second network and wherein the first network is a 3GPP network and the second network is a Wireless Local Area Network;
a processor (5; 11) arranged to generate the authentication master key associated with the mobile device using a first nonce generated by the first authentication device in the first network, and a second nonce generated by the mobile device; and
send the generated authentication master key to a second authentication device in second network,
wherein the generated authentication master key is used by the second authentication device to authenticate the mobile device in the second network, wherein the authentication master key is a Pairwise Master Key.

4. A computer program (15), comprising computer readable code which, when run on one or more processors implements the method of any of claims 1 to 2.

5. A computer program product comprising a non-transitory computer readable medium (8; 10; 14; 16) and a computer program (9; 15) according to claim 4, wherein the computer program is stored on the computer readable medium.

## Patentansprüche

1. Verfahren zum Authentifizieren einer mobilen Vorrichtung in einem zweiten Netzwerk, wobei die mobile Vorrichtung bereits in einem ersten Netzwerk authentifiziert wurde, wobei das Verfahren bei einer ersten Authentifizierungsvorrichtung in dem ersten Netzwerk Folgendes umfasst;
vor dem Erzeugen eines Authentifizierungsmasterschlüssels, Empfangen (S18) einer Anforderung des Authentifizierungsmasterschlüssels an einem ersten Authentifizierungsknoten, wobei die Anforderung eine von der mobilen Vorrichtung erzeugte, zweite Nonce enthält, wobei die Anforderung von einer zweiten Authentifizierungsvorrichtung in dem zweiten Netzwerk empfangen wird und wobei das erste Netzwerk ein 3GPP-Netzwerk ist und das zweite Netzwerk ein drahtloses lokales Netzwerk ist;
Erzeugen (S15) des der mobilen Vorrichtung zugeordneten Authentifizierungsmasterschlüssels unter Verwendung einer durch die erste Authentifizierungsvorrichtung erzeugten, ersten Nonce und der durch die mobile Vorrichtung erzeugten, zweiten Nonce; Senden (S16) des erzeugten Authentifizierungsmasterschlüssels an die zweite Authentifizierungsvorrichtung in dem zweiten Netzwerk; und
wobei der erzeugte Authentifizierungsmasterschlüssel durch die zweite Authentifizierungsvorrichtung verwendet wird (S17), um die mobile Vorrichtung in dem zweiten Netzwerk zu authentifizieren, wobei der Authentifizierungsmasterschlüssel ein paarweiser Masterschlüssel ist.

2. Verfahren zum Authentifizieren einer mobilen Vorrichtung in einem zweiten Netzwerk, wobei die mobile Vorrichtung bereits in einem ersten Netzwerk authentifiziert wurde, wobei das Verfahren an einer zweiten Authentifizierungsvorrichtung in dem zweiten Netzwerk Folgendes umfasst;
vor dem Empfangen eines erzeugten Authentifizierungsmasterschlüssels, Senden (S37) einer Anforderung des Authentifizierungsmasterschlüssels an eine Authentifizierungsvorrichtung im ersten Netzwerk, wobei das erste Netzwerk ein 3GPP-Netzwerk ist und das zweite Netzwerk ein drahtloses lokales Netzwerk ist;
Empfangen (S16) des erzeugten Authentifizierungsmasterschlüssels von der Authentifizierungsvorrichtung im ersten Netzwerk, wobei der Authentifizierungsmasterschlüssel unter Verwendung einer durch die Authentifizierungsvorrichtung im ersten Netzwerk erzeugten, ersten Nonce und einer durch die mobile Vorrichtung erzeugten, zweiten Nonce erzeugt wurde;
Verwenden des erzeugtes Authentifizierungsmasterschlüssels (S17), um die mobile Vorrichtung in dem zweiten Netzwerk zu authentifizieren, wobei der Authentifizierungsmasterschlüssel ein paarweiser Masterschlüssel ist.

3. Vorrichtung (1; 4), die dazu eingerichtet ist, einen Authentifizierungsmasterschlüssel zum Authentifizieren einer mobilen Vorrichtung in einem zweiten Netzwerk zu erzeugen, wobei die mobile Vorrichtung bereits in einem ersten Netzwerk authentifiziert wurde, wobei die Vorrichtung Folgendes umfasst:
einen Empfänger (6), der dazu eingerichtet ist, vor dem Erzeugen des Authentifizierungsmasterschlüssels eine Anforderung eines Authentifizierungsmasterschlüssels zu empfangen, wobei die Anforderung eine durch die mobile Vorrichtung erzeugte, zweite Nonce enthält, wobei die Vorrichtung eine erste Authentifizierungsvorrichtung (4) in dem ersten Netzwerk ist,
wobei die Anforderung von einer zweiten Authentifizierungsvorrichtung in dem zweiten Netzwerk empfangen wird und wobei das erste Netzwerk ein 3GPP-Netzwerk ist und das zweite Netzwerk ein drahtloses lokales Netzwerk ist;
einen Prozessor (5; 11), der dazu eingerichtet ist, den der mobilen Vorrichtung zugeordneten Authentifizierungsmasterschlüssel unter Verwendung einer durch die erste Authentifizierungsvorrichtung in dem ersten Netzwerk erzeugten, ersten Nonce und einer durch die mobile Vorrichtung erzeugten, zweiten Nonce zu erzeugen; und
Senden des erzeugten Authentifizierungsmasterschlüssels an eine zweite Authentifizierungsvorrichtung in dem zweiten Netzwerk,
wobei der erzeugte Authentifizierungsmasterschlüssel durch die zweite Authentifizierungsvorrichtung verwendet wird, um die mobile Vorrichtung in dem zweiten Netzwerk zu authentifizieren, wobei der Authentifizierungsmasterschlüssel ein paarweiser Masterschlüssel ist.

4. Computerprogramm (15), umfassend computerlesbaren Code, der bei seiner Ausführung auf einem oder mehreren Prozessoren das Verfahren nach einem der Ansprüche 1 bis 2 umsetzt.

5. Computerprogrammprodukt, umfassend ein nichtflüchtiges computerlesbares Speichermedium (8; 10; 14; 16) und ein Computerprogramm (9, 15) nach Anspruch 4, wobei das Computerprogramm auf dem computerlesbaren Speichermedium gespeichert ist.

## Revendications

1. Procédé d'authentification d'un dispositif mobile dans un second réseau, le dispositif mobile étant déjà authentifié dans un premier réseau, le procédé comprenant, au niveau d'un premier dispositif d'authentification dans le premier réseau ;
avant la génération d'une clé maîtresse d'authentification, la réception (S18) au niveau d'un premier nœud d'authentification d'une demande de la clé maîtresse d'authentification, la demande incluant un second nonce généré par le dispositif mobile, dans lequel la demande est reçue à partir d'un second dispositif d'authentification dans le second réseau et dans lequel le premier réseau est un réseau 3GPP et le second réseau est un réseau local sans fil ;
la génération (S15) de la clé maîtresse d'authentification associée au dispositif mobile en utilisant un premier nonce généré par le premier dispositif d'authentification et le second nonce généré par le dispositif mobile ;
l'envoi (S16) de la clé maîtresse d'authentification générée au second dispositif d'authentification dans le second réseau ; et dans lequel la clé maîtresse d'authentification générée est utilisée (S17) par le second dispositif d'authentification pour authentifier le dispositif mobile dans le second réseau, dans lequel la clé maîtresse d'authentification est une clé maîtresse par paire.

2. Procédé d'authentification d'un dispositif mobile dans un second réseau, le dispositif mobile étant déjà authentifié dans un premier réseau, le procédé comprenant, au niveau d'un second dispositif d'authentification dans le second réseau ;
avant la réception d'une clé maîtresse d'authentification générée, l'envoi (S37) à un premier dispositif d'authentification de réseau d'une demande de la clé maîtresse d'authentification, dans lequel le premier réseau est un réseau 3GPP et le second réseau est un réseau local sans fil ;
la réception (S16) de la clé maîtresse d'authentification générée provenant du premier dispositif d'authentification de réseau, la clé maîtresse d'authentification ayant été générée en utilisant un premier nonce généré par le premier dispositif d'authentification de réseau et un second nonce généré par le dispositif mobile ;
l'utilisation de la clé maîtresse d'authentification générée (S17) pour authentifier le dispositif mobile dans le second réseau, dans lequel la clé maîtresse d'authentification est une clé maîtresse par paire.

3. Dispositif (1 ; 4) agencé pour générer une clé maîtresse d'authentification destinée à l'authentification d'un dispositif mobile dans un second réseau, le dispositif mobile étant déjà authentifié dans un premier réseau, le dispositif comprenant :
un récepteur (6) agencé pour recevoir une demande d'une clé maîtresse d'authentification, la demande incluant un second nonce généré par le dispositif mobile, avant la génération de la clé maîtresse d'authentification, dans lequel le dispositif est un premier dispositif d'authentification (4) dans le premier réseau, dans lequel la demande est reçue à partir d'un second dispositif d'authentification dans le second réseau et dans lequel le premier réseau est un réseau 3GPP et le second réseau est un réseau local sans fil ;
un processeur (5 ; 11) agencé pour générer la clé maîtresse d'authentification associée au dispositif mobile en utilisant un premier nonce généré par le premier dispositif d'authentification dans le premier réseau, et un second nonce généré par le dispositif mobile ; et
l'envoi de la clé maîtresse d'authentification générée à un second dispositif d'authentification dans le second réseau, dans lequel la clé maîtresse d'authentification générée est utilisée par le second dispositif d'authentification pour authentifier le dispositif mobile dans le second réseau, dans lequel la clé maîtresse d'authentification est une clé maîtresse par paire.

4. Programme informatique (15) comprenant un code lisible par un ordinateur qui, lorsqu'il est exécuté sur un ou plusieurs processeurs met en œuvre le procédé selon l'une quelconque des revendications 1 à 2.

5. Produit de programme informatique comprenant un support lisible par ordinateur non transitoire (8 ; 10 ; 14 ; 16) et un programme informatique (9 ; 15) selon la revendication 4, dans lequel le programme informatique est stocké sur le support lisible par ordinateur.
